# EUROPÄISCHE PATENTANMELDUNG

(11) **EP 3 058 814 A1**
(43) Veröffentlichungstag der Anmeldung: **24.08.2016**
(21) Anmeldenummer: 15000467.9
(22) Anmeldetag: 17.02.2015
(51) Int. Cl.: A01K 5/00

(54) **Förderband zum Verteilen von Viehfutter, Stroh oder ähnlichen Materialien**

(71) Anmelder: B. Strautmann & Söhne GmbH u. Co. KG, 49196 Bad Laer (DE)
(72) Erfinder: Strautmann, Wolfgang, 49196 Bad Laer (DE); Heggemann, Norbert, 33775 Versmold (DE); Schacht, Sebastian, 33790 Halle (DE)
(74) Vertreter: Träger, Denis

(57) **Zusammenfassung**

Die Erfindung betrifft ein Förderband (1) zum Verteilen von Viehfutter, Stroh oder ähnlichem Material nach dem Oberbegriff des Anspruchs 1 sowie einen mit einem solchen Förderband ausgestatteten Futtermischwagen.

Das Förderband umfasst einen Tragrahmen (2), der mit einer Bodenplatte (7) ausgestattet ist. Im Tragrahmen (2) sind Achswellen (8) gelagert, wobei auf jeder Achswelle (8) wenigstens zwei Umlenkräder (10) gelagert sind und wobei durch den Bereich zwischen den Umlenkrädern (10) wenigstens eine Abwurfstelle (17) für das zu verteilende Viehfutter, Stroh oder ähnlichem Material definiert wird. Die Umlenkräder werden von einem endlosen Kratzboden (18) umlaufen. Der endlose Kratzboden wird ausgebildet durch Zugstränge (13) und diese verbindende Förderleisten (14). Der Kratzboden (18) ist verbundenen mit einem ersten Antrieb (19) und transportiert aufgebrachtes Fördergut zur Abwurfstelle (17).

Nachteilig an diesem Förderband ist, dass Fördergut zwischen Bodenplatte und Zugstrang gelangen kann. Insbesondere wenn es sich bei dem Zugstrang um einen Nockenriemen handelt, kann Fördergut an den Freiräumen zwischen den Nocken mitgenommen werden und nachfolgend Störungen verursachen.

Um die Unterseite des Zugstranges besser vor Verunreinigungen zu schützen, wird vorgeschlagen, die Bodenplatte zwischen den Zugsträngen anzuordnen.

## Beschreibung

Die Erfindung betrifft ein Förderband zum Verteilen von Viehfutter, Stroh und ähnlichem Material nach dem Oberbegriff des Anspruchs 1 sowie einen mit einem solchen Förderband ausgestatteten Futtermischwagen.

Förderbänder werden unter anderem an Maschinen zur Verteilung lockerer Güter verwendet. Ein verbreitetes Einsatzgebiet ist die Viehfütterung mittels Futtermischwagen. Hierbei wird aus dem Mischraum des Futtermischwagens Viehfutter auf das Förderband abgegeben und von diesem in einem Futtergang abgelegt. Die Förderbänder können vor oder hinter dem Mischraum des Futtermischwagens angeordnet und so breit sein, dass eine Futterabgabe zu beiden Seiten des Futtermischwagens hin möglich ist. Die Austragrichtung wird im Allgemeinen durch Umschaltung der Fördereinrichtung eingestellt.

Alternativ dazu können an Futtermischwagen auch kurze Förderbänder vorgesehen sein, die die Futterabgabe nur zu einer Seite hin ermöglichen. Solche Förderbänder verfügen über lediglich eine Abwurfstelle.

Zu unterscheiden ist weiterhin zwischen Förderbändern, die mit einem so genannten Kratzboden ausgestattet sind und Förderbändern mit einem durchgängigen Transportband. Als Kratzboden wird eine Fördereinrichtung dann bezeichnet, wenn zwischen wenigstens zwei Antriebssträngen Förderleisten angebracht sind und die Förderleisten einen darunter liegenden festen Boden überstreichen. Hierbei wird das zu transportierende Material von den Förderleisten über den Boden geschoben.

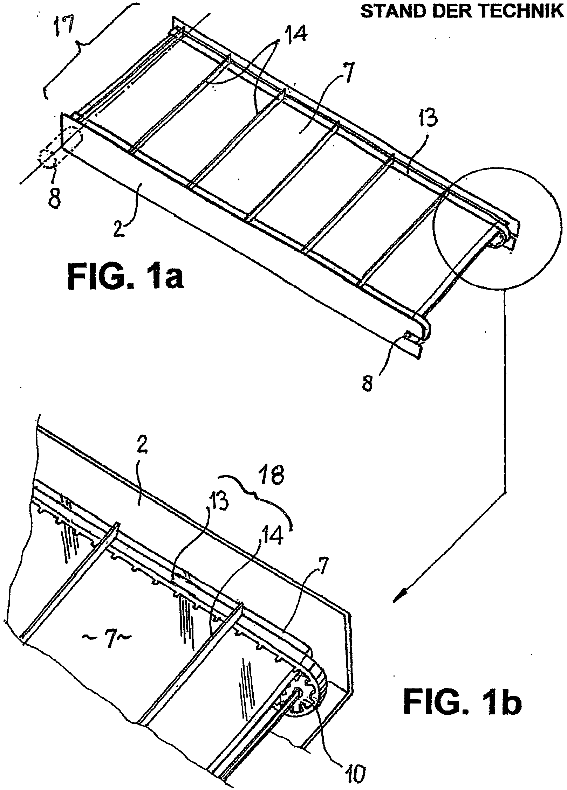

Ein als Stand der Technik bekanntes Förderband ist in Fig. 1a und 1b dargestellt. Das Förderband umfasst einen umlaufenden Kratzboden sowie einen Tragrahmen, der mit einer starr angebrachten Bodenplatte ausgestattet ist. Im Tragrahmen sind weiterhin zwei mit Umlenkrädern für den Kratzboden versehene Achswellen gelagert. Der Kratzboden wird ausgebildet durch wenigstens zwei die Umlenkräder umlaufende und voneinander beabstandete Zugstränge sowie diese verbindenden Förderleisten. Bei den Zugsträngen handelt es sich um Nockenriemen. Die Umlenkräder sind als Fingerräder ausgeführt, so dass die die Fingerrädern umlaufenden Nockenriemen eine formschlüssige Antriebsverbindung ausbilden.

Der Kratzboden ist mit einem Antrieb verbunden, bei dem es sich in der Regel einem Hydraulikmotor handelt. Die Förderleisten liegen gleitend auf der Bodenplatte auf, so dass auf das Förderband aufgebrachtes Fördergut zur seitlichen Abwurfstelle hin transportierbar ist.

Nachteilig an diesem Förderband ist, dass Fördergut zwischen Bodenplatte und Zugstrang gelangen kann. Insbesondere wenn es sich bei dem Zugstrang um einen Nockenriemen handelt, kann Fördergut an den Freiräumen zwischen den Nocken mitgenommen werden und nachfolgend Störungen verursachen.

Aufgabe der Erfindung ist es, ein mit einem Kratzboden ausgestattetes Förderband vorzuschlagen, bei dem die Unterseite des Zugstranges besser vor Verunreinigungen geschützt ist.

Die erfindungsgemäße Aufgabe wird gelöst durch ein Förderband nach dem Oberbegriff des Anspruches 1, bei dem die Bodenplatte zwischen den Zugsträngen angeordnet ist.

Der umlaufende Kratzboden weist wenigstens zwei parallel zueinander verlaufende Zugstränge auf, die durch Förderleisten miteinander verbunden sind. Die Bodenplatte ist erfindungsgemäß nicht unterhalb des Kratzbodens angeordnet, sondern zwischen den Zugsträngen, so dass die Zugstränge von ihrer Unterseite in keinen direkten Kontakt mit dem Fördergut geraten. Fördergut oder sonstige Partikel können sich somit nicht zwischen den Zugsträngen und der Bodenplatte ansammeln.

In einer bevorzugten Ausführungsform sind die Zugstränge als Nockenriemen ausgeführt. Die Nockenriemen besitzen auf ihrer Innenseite gleichmäßig voneinander beabstandete, durch Lücken getrennte Nocken und umlaufen wenigstens zwei Fingerräder. Die Fingerräder haben auf ihrem Umfang Mitnahmemittel, die einen Abstand voneinander aufweisen, der der Teilung der Nockenriemen entspricht. Diese Mitnahmemittel greifen formschlüssig in die zwischen den Nocken gebildeten Lücken der Nockenriemen ein, wodurch ein schlupffreier Antrieb möglich ist. Die Nockenriemen sind in aller Regel aus durch Gewebeeinlagen verstärktem Polymer hergestellt.

Das Fördergut wird vom umlaufenden Kratzboden zu den seitlichen Abwurfstellen hin transportiert und dort abgelegt. Um eine gleichmäßige Ablage sicherzustellen ist es günstig, wenn an der Abwurfstelle ein Abschlusselement angeordnet ist, welches spaltfrei an eine Endseite der Bodenplatte anschließt oder von der Bodenplatte überlappt wird.

Bei diesem Abschlusselement kann es sich beispielsweise um eine Förderwalze oder ein Formteil handeln. Soweit eine Förderwalze vorgesehen ist, wird diese vom Kratzboden umlaufen. Soweit ein Formteil vorgesehen ist, ist dieses vorzugsweise an die Kontur der Kratzbodenumlaufbahn im Bereich der Abwurfstelle angepasst, so dass Fördergut reibungsarm über die Abwurfkante hinweggleiten kann.

Die am Rahmen angebrachte Bodenplatte weist vorzugsweise eine Breite auf, die dem Abstandsmaß zwischen den Zugsträngen plus eines beidseitig zwischen Zugstrang und Bodenplatte vorgesehen Abstandes entspricht. Der an dieser Stelle vorgesehene Abstand ist vorzugsweise kleiner als 5 mm. Hierdurch ist einerseits die Reibung zwischen beweglichem Zugstrang und starrer Bodenplatte reduziert und andererseits kann sich in dem durch den Abstand definierten Spalt zwischen Bodenplatte und Zugstrang nur wenig Fördergut ablagern bzw. durch diesen hindurchrieseln.

Besonders günstig ist es, wenn die Oberseite der Zugstränge und die Oberseite der Bodenplatte auf einer Höhe liegen, bzw. eine Ebene bilden. Die auf den Zugsträngen angebrachten Förderleisten können dann sehr einfach ausgeführt sein, beispielsweise in Form von Winkelprofilen. Soweit die Oberseiten der Zugstränge und der Bodenplatte in einer Ebene liegen, überstreichen die Förderleisten die Bodenplatte weitgehend spielfrei. Soweit die Bodenplatte einen Höhenversatz gegenüber den Zugsträngen aufweist, kann dieser Höhenversatz durch Anpassungsmaßnahmen an der Förderleiste, beispielsweise durch Verkröpfen der Förderleiste, ausgeglichen werden.

Die Zugstränge des Förderbandes werden nach außen hin durch den Rahmen, bzw. am Rahmen des Förderbandes angebrachte Verkleidungselemente, begrenzt und nach innen hin durch die Bodenplatte. Somit ergeben sich zwischen Rahmen und Zugstrang sowie zwischen dem Zugstrang und der Bodenplatte Übergangsbereiche bzw. geringfügige Spalten, durch welche feinstrukturiertes Fördergut herausrieseln kann. Zur Vermeidung solcher Rieselverluste kann eine Abdeckung vorgesehen sein, wenigstens einen Zugstrang im Bereich zwischen Tragrahmen und Zugstrang und/oder im Bereich zwischen Zugstrang und Bodenplatte abdeckt

So kann ein Eindringen von Fördergut verhindert werden, wenn am Rahmen angebrachte Abdeckungen vorgesehen sind, die nicht nur den Randbereich der Zugstränge, sondern vielmehr die Zugstränge und deren Übergangsbereiche insgesamt übergreifen. In Betracht kommen beispielsweise Profilelemente, die ausgehend vom Rahmen bis in den Bereich der Bodenplatte ragen und den Zugstrang insgesamt dachartig abdeckenden.

Unabhängig davon, ob die Bodenplatte lediglich an den Zugstrang heranreicht oder diesen in einem Teilbereich überdeckt, kann auf der dem Rahmen zugewandten Seite des Zugstranges ein spezielles Abdeckelement vorgesehen sein, welches den Spalt zwischen Zugstrang und Rahmen abdeckt. Bei diesem speziellen Abdeckelement kann es sich beispielsweise um einer am Rahmen unmittelbar oberhalb des Zugstrangs angebrachte Kunststoffleiste handeln.

In einer bevorzugten Ausführungsform kann auch vorgesehen sein, dass die Bodenplatte nicht nur bis an die beweglichen Zugstränge heranreicht, sondern diese in einem Randbereich überdeckt. In diesem Fall befindet sich zwischen Bodenplatte und Zugstrang kein senkrechter, sondern ein waagerechter Spalt. Auch dieser waagerechte Spalt sollte möglichst klein sein. Ein solcher waagerechter Spalt ist weniger anfällig für das Eindringen von Partikeln als ein senkrechter Spalt. Der waagerechte Spalt kann sogar vollständig entfallen, wenn der sich bewegende Zugstrang unmittelbar an der fest angebrachten Bodenplatte entlanggeführt wird.

In einer besonders bevorzugten Ausführungsform ist der den Zugstrang überragende Bereich der Bodenplatte in Form einer Stufe ausgeführt, wobei die Stufe eine Dicke aufweist, die kleiner ist als die Dicke der Bodenplatte im Bereich zwischen den Stufen. Da bei dieser abgestuften Ausführung der den Zugstrang abdeckende Bereich sehr dünn ist, reduziert sich der Höhenunterschied zwischen der Zugstrang-Oberseite und der Bodenplatten-Oberseite. Die Abstufung bildet zudem eine labyrinthartige Abdichtung zwischen Bodenplatte und Förderstrang.

Bei Ausführungsformen, bei denen die Bodenplatte die Zugstränge teilweise überlappt, ist es günstig, wenn geeignete Maßnahmen getroffen werden, um die an den niedriger liegenden Zugsträngen befestigten Förderleisten auf das Niveau der höher liegenden Bodenplatte anzuheben. Die Förderleisten können beispielsweise verkröpft oder mit zwischen Förderleiste und Zugstrang angeordneten Unterlegelementen ausgestattet sein.

Das erfindungsgemäße Förderband ist insbesondere zum Einsatz an einem zur Ausbringung von Viehfutter vorgesehenen Futtermisch- oder Futterverteilwagen geeignet.

Die Erfindung wird nachstehend an Beispielen beschrieben und in den Zeichnungen dargestellt.
- Fig. 1a: zeigt ein Förderband nach dem Stand der Technik;
- Fig. 1b: zeigt einen Detailbereich des in Fig. 1a dargestellten Förderbandes;
- Fig. 2: zeigt eine perspektivische Ansicht eines erfindungsgemäßen Förderbandes in einer ersten Ausführungsform;
- Fig. 3: zeigt eine Draufsicht des Förderbandes aus Fig. 2;
- Fig. 4: eine Schnittansicht A - A nach Fig. 3;
- Fig. 5: zeigt eine Schnittansicht B - B nach Fig. 3;
- Fig. 6: zeigt eine Seitenansicht eines Förderbands mit einem Formteil an der Abwurfstelle;
- Fig. 7: zeigt ein Detail aus Fig. 6
- Fig. 8: zeigt ein Förderband, bei dem der Zugstrang durch ein Profilelement und eine abgestufte Bodenplatte abgedeckt wird;
- Fig. 9: zeigt ein Detail aus Fig. 8.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

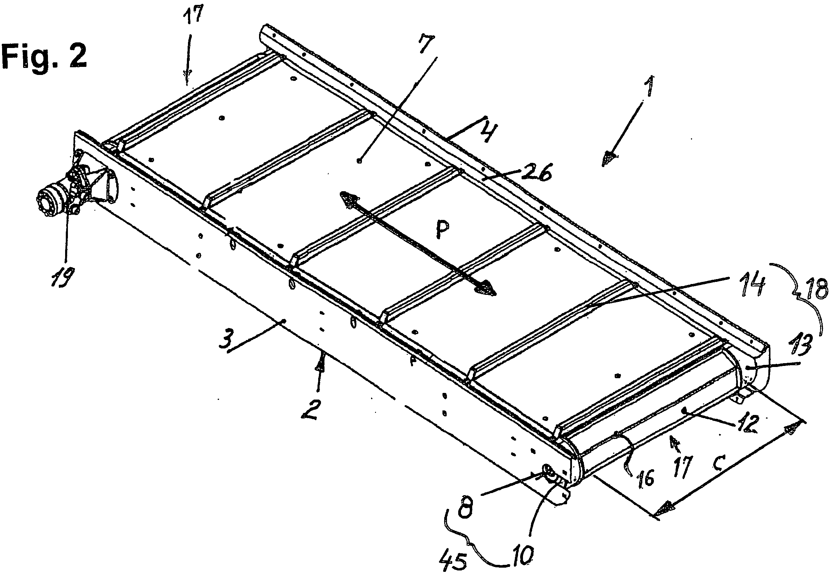

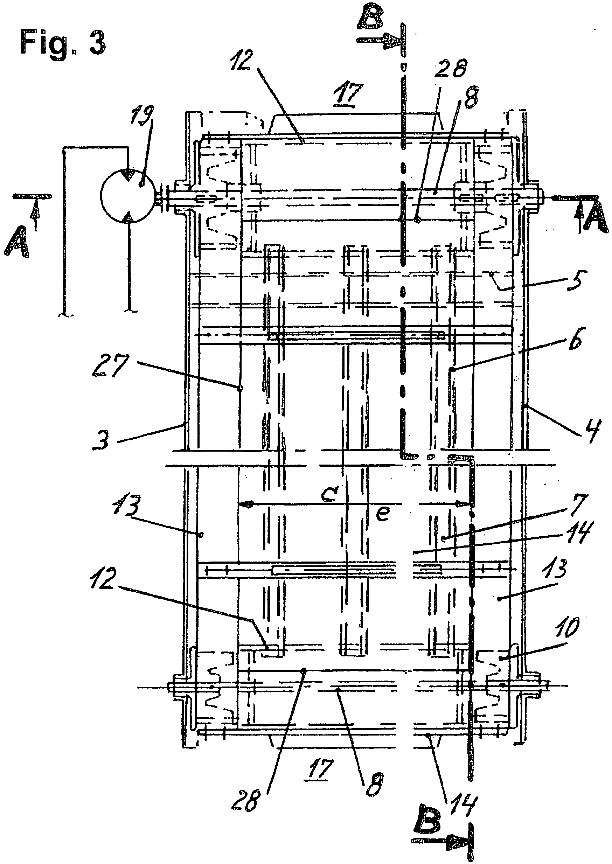

In den Fig. 2 bis 5 ist eine erste Ausführungsform eines erfindungsgemäßen Förderbandes 1 dargestellt. Das Förderband 1 umfasst im Wesentlichen:
- einen Tragrahmen 2 mit Seitenwänden 3, 4. Die Seitenwände 3, 4 sind miteinander über Querträger 5 verbunden. Die Querträger 5 tragen Auflageschienen 6, auf denen eine Bodenplatte 7 befestigt ist.
- in den Seitenwänden 3, 4 gelagerten Achswellen 8 mit darauf befestigten und mit Fingern 11 versehene Umlenkrädern 10 sowie einer zwischen den Umlenkrädern 10 angeordneten Förderwalze 12,
- einen Kratzboden 18, der gebildet ist aus Zugsträngen 13 sowie daran angebrachten Förderleisten 14. Der Kratzboden ist mittels eines ersten Antriebs 19, bei dem es sich im Ausführungsbeispiel um einen Hydraulikmotor handelt, antreibbar.

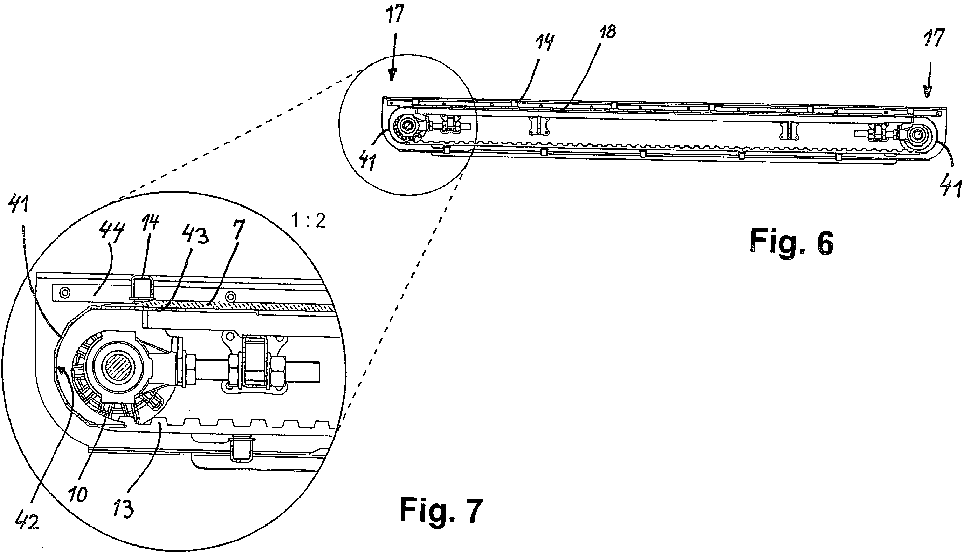

Die Förderwalze 12 ist ebenso wie die Umlenkräder 10 fest mit der Achswelle 8 verbunden. Die Förderwalze 12 weist einen Mantel 15 mit einer polygonartige Kontur auf und ist mit Förderelementen 16, bei denen es sich im Ausführungsbeispiel um Schlagleisten handelt, besetzt. Alternativ zu einer Förderwalze 12 kann an der Abwurfstelle 17 auch ein Formteil 41 vorgesehen sein. Bei dem Formteil kann es sich beispielsweise um ein halbrundes Blechprofil handeln, wie es in Fig. 7 dargestellt ist. Das Formteil 41 weist einen Radius auf, der der Kratzbodenumlaufbahn 42 im Bereich der Umlenkeinrichtung 45 entspricht. Der Endbereich 43 des Formteils 41 ist unterhalb der Bodenplatte 7 angeordnet, so dass auszutragendes Fördergut von der Bodenplatte 7 auf das Formteil 41 gelangt und reibungsarm abgelegt werden kann.

Die Bodenplatte 7 ist zwischen den Zugsträngen 13 angeordnet. Die Zugstränge 13, bei denen es sich im Ausführungsbeispiel um Nockenriemen handelt, werden also nicht über die Bodenplatte 7 geleitet, sondern zwischen Tragrahmen 2 und Bodenplatte 7 geführt.

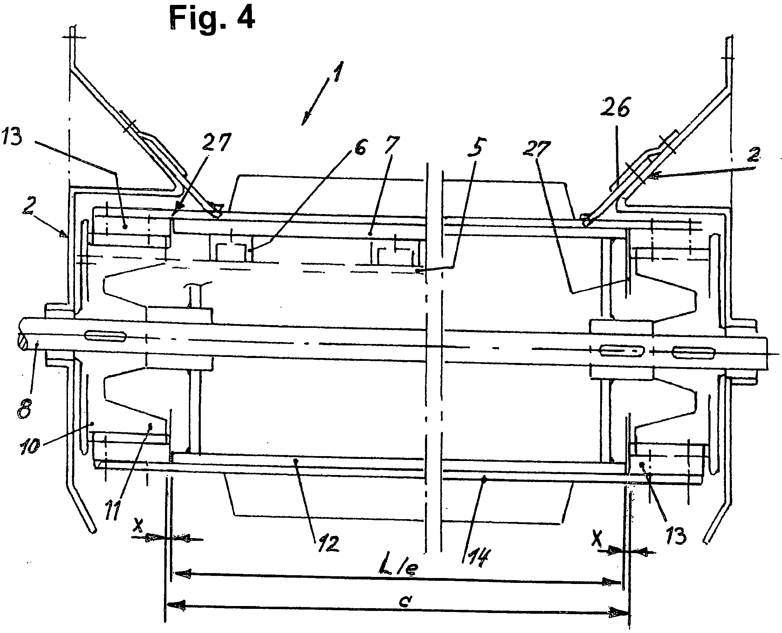

Das dem Förderband 1 im Allgemeinen kontinuierlich zugeführte Fördergut, z. B. Viehfutter aus dem Mischraum eines Futtermischwagens, wird zunächst auf der Bodenplatte 7 abgelegt und dort von den auf den Zugsträngen 13 befestigten Förderleisten 14 erfasst. Die Bodenplatte 7 weist eine Breite e auf, die etwas kleiner ist, als der Abstand c zwischen den Zugsträngen 13. Allerdings ist zwischen der Bodenplatte 7 und den Zugsträngen 13 jeweils ein ca. 3 mm breiter Spalt x vorgesehen, so dass ein direkter Kontakt zwischen den Zugsträngen 13 und der Bodenplatte 7 vermieden wird. Analog dazu weist auch die Förderwalze 12, bzw. das Formteils 41, eine Breite L auf, die etwas geringer ist als der Abstand c zwischen den Zugsträngen 13 (vergl. Fig. 4).

Zur Vermeidung von Materialablagerungen zwischen den Zugsträngen 13 und der Bodenplatte 7 sind am Rahmen 2 Abdeckungen 26 angebracht, die die Nahtlinien 27 überdecken. Die Oberseite 31 der Zugstränge 13 und die Oberseite 32 der Bodenplatte 7 liegen in der gleichen Ebene, so dass die Förderleisten 14 die Bodenplatte 7 im Arbeitseinsatz gleitend überlaufen.

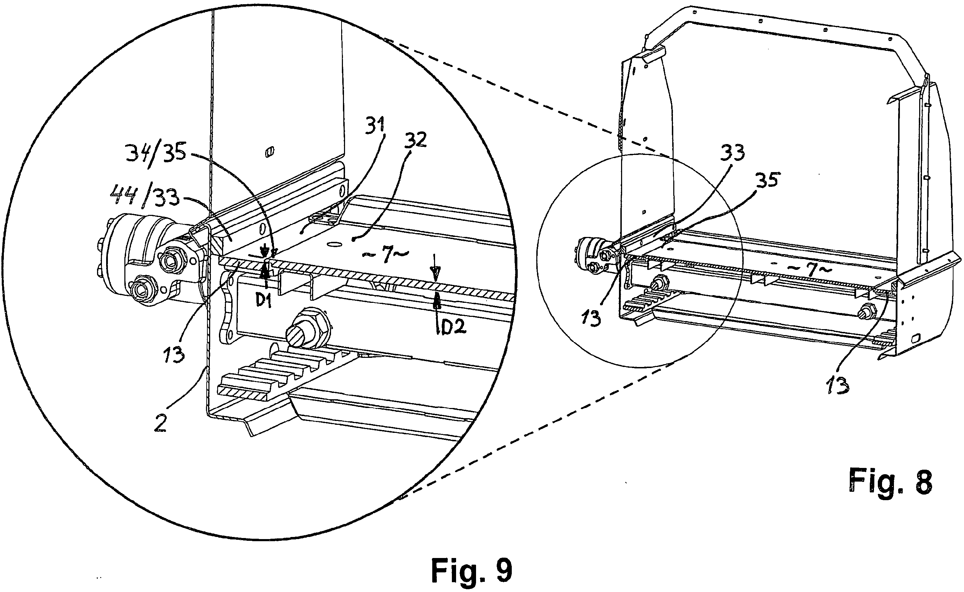

Anstelle der in Fig. 4 dargestellten Abdeckung 26, welche jeweils einen Zugstrang komplett überdecken, können auch Abdeckungen 33 vorgesehen sein, die jeweils nur die Randbereiche der Zugstränge 13 abdecken. Eine solche, nur den äußeren, zum Rahmen 2 gerichteten, Randbereich überdeckende, Abdeckung 33 in Form eines Profilelements 44 ist in Fig. 8 gut zu erkennen. Das Profilelement 44 ist weitgehend spielfrei unmittelbar oberhalb des Zugstranges 13 angeordnet und schützt so den Bereich zwischen Zugstrang 13 und Tragrahmen 2 vor dem Eindringen von Fördergut-Partikeln oder sonstigen Verschmutzungen.

Die Figuren 8 und 9 verdeutlichen, dass auf der anderen Seite des Zugstranges 13 der Außenbereich der Bodenplatte 7 selbst als Abdeckung 34 für den zur Bodenplatte 7 gerichteten Randbereich des Zugstrangs 13 dient. Um die Höhendifferenz zwischen der Oberfläche 31 des Zugstrangs 13 und der Oberfläche 32 der Bodenplatte 7 zu minimieren, ist der Abdeckungsbereich im Ausführungsbeispiel in Form von Stufen 35 ausgeführt. Die Bodenplatte weist somit im Abdeckungsbereich eine Dicke D1 auf, die kleiner ist als die Dicke D2 im Bereich der Bodenplatte 7 zwischen den Stufen 35. Alternativ hierzu ist aber auch eine einfachere Ausführung möglich, bei der die Bodenplatte keine Stufe 35 aufweist und den Zugstrang 13 in voller Dicke überlappt.

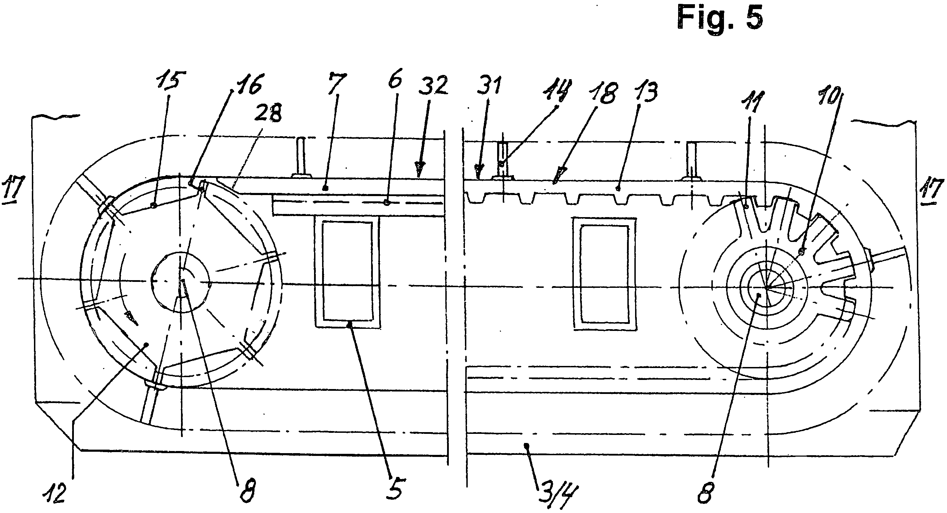

Die Bodenplatte 7 umfasst ferner eine Endseite 28 (vergl. Fig. 5). Die Endseite 28 ist an die Kontur der Förderwalze 12 bzw. deren Umlaufbahn bei Rotation, angepasst. Der Kratzboden 18 beschreibt eine längliche Umlaufbahn, die durch die Umlenkräder 10 definiert wird.

Die Breite des Förderbandes 1 ist an die Fahrzeugbreite eines Futtermischwagens angepasst und beträgt ca. 2 Meter. Der Kratzboden 18 kann über den Antrieb 19 in die beiden dargestellten Pfeilrichtungen P (Fig. 2) bewegt werden, so dass das auf die Bodenplatte 7 abgelegte Fördergut den Abwurfstellen 17 zugeführt werden kann.

**Bezugszeichenliste:**

| | |
|---|---|
| 1 | Förderband |
| 2 | Tragrahmen |
| 3 | Seitenwand |
| 4 | Seitenwand |
| 5 | Quertraverse |
| 6 | Auflagenschiene |
| 7 | Bodenplatte |
| 8 | Achswelle |
| 9 | - |
| 10 | Umlenkrad |
| 11 | Finger |
| 12 | Förderwalze |
| 13 | Zugstrang |
| 14 | Förderleiste |
| 15 | Mantel |
| 16 | Förderelement |
| 17 | Abwurfstelle |
| 18 | Kratzboden |
| 19 | Hydromotor (Konstantmotor) |
| 20 | - |
| 21 | - |
| 22 | - |
| 23 | - |
| 24 | - |
| 25 | - |
| 26 | Abdeckung |
| 27 | Nahtlinie |
| 28 | Endseite |
| 29 | - |
| 30 | - |
| 31 | Oberseite (der Zugstränge 13) |
| 32 | Oberseite (der Bodenplatte 7) |
| 33 | Abdeckung (zum Rahen 2 hin) |
| 34 | Abdeckung (zur Bodenplatte 7 hin) |
| 35 | Stufe |
| | |
| 41 | Formteil |
| 42 | Kratzbodenumlaufbahn |
| 43 | Endbereich (von 41) |
| 44 | Profilelement |
| 45 | Umlenkeinrichtung |
| | |
| A-A | Schnitt |
| B - B | Schnitt |
| D1 | Dicke |
| D2 | Dicke |
| c | Abstandsmaß (der Zugstränge 13) |
| e | Breite (der Bodenplatte 7) |
| x | Abstand |
| L | Breite (der Förderwalze 12, 12') |
| P | Pfeilrichtunq |

## Patentansprüche

1. Förderband (1) zum Verteilen von Viehfutter, Stroh oder ähnlichem Material, umfassend:
- einen Tragrahmen (2);
- wenigstens zwei Umlenkeinrichtungen (45), die im Tragrahmen (2) gelagert sind;
- einen endlosen Kratzboden (18) umfassend wenigstens zwei die Umlenkeinrichtungen (45) umlaufenden Zugstränge (13) und diese verbindende Förderleisten (14);
- einen mit dem endlosen Kratzboden (18) verbundenen Antrieb (19),
- eine mit dem Tragrahmen (2) starr verbundene Bodenplatte (7), über welche die Förderleisten (14) geführt werden,
**dadurch gekennzeichnet, dass** die Bodenplatte (7) zwischen den Zugsträngen (13) angeordnet ist.

2. Förderband nach Anspruch 1, **dadurch gekennzeichnet, dass** es sich bei den Zugsträngen (13) um Nockenriemen handelt.

3. Förderband (1) nach Anspruch 1 oder 2, **dadurch gekennzeichnet, dass** eine Abwurfstelle (17) vorgesehen ist, an der ein Abschlusselement (12, 41) angeordnet ist, welches spaltfrei an eine Endseite (28) der Bodenplatte (7) anschließt oder von der Bodenplatte (7) überlappt wird.

4. Förderband nach Anspruch 3, **dadurch gekennzeichnet, dass** es sich bei dem Abschlusselement um eine Förderwalze (12) oder ein Formteil (41) handelt.

5. Förderband (1) nach Anspruch 4, **dadurch gekennzeichnet, dass** das Formteil (41) an die Kontur der Kratzbodenumlaufbahn (42) im Bereich der Abwurfstelle (17) angepasst ist.

6. Förderband nach einem der Ansprüche 1 bis 5, **dadurch gekennzeichnet, dass** die Bodenplatte (7) eine Breite (e) aufweist, die dem Abstandsmaß (c) zwischen den Zugsträngen (13) plus eines beidseitig zwischen Zugstrang (13) und Bodenplatte (7) vorgesehen Abstandes (x) zur Verringerung der Reibung, entspricht.

7. Förderband nach einem der Ansprüche 1 bis 6, **dadurch gekennzeichnet, dass** die Oberseite (31) der Zugstränge (13) und die Oberseite (32) der Bodenplatte (7) auf einer Höhe liegen, bzw. eine Ebene bilden.

8. Förderband (1) nach einem der Ansprüche 1 bis 7, **dadurch gekennzeichnet, dass** wenigstens eine Abdeckung (26; 33; 34) vorgesehen ist, die wenigstens einen Zugstrang (13) im Bereich zwischen Tragrahmen (2) und Zugstrang (13) und/oder im Bereich zwischen Zugstrang (13) und Bodenplatte (7) abdeckt.

9. Förderband nach Anspruch 8, **dadurch gekennzeichnet, dass** die am Tragrahmen (2) angebrachte Abdeckung (26) die durch den Übergangsbereich von Bodenplatte (7) zu den Zugsträngen (13) und den Übergangsbereich von dem Abschlusselement (12; 41) zu den Zugsträngen (13) ausgebildeten Nahtlinien (27) übergreift.

10. Förderband nach einem der Ansprüche 8 oder 9, **dadurch gekennzeichnet, dass** die Abdeckung (33) für wenigstens einen Zugstrang (13) an seiner der Bodenplatte (7) abgewandten Seite als Profilelement (44) ausgebildet ist.

11. Förderband nach einem der Ansprüche 8 bis 10, **dadurch gekennzeichnet, dass** die Abdeckung (34) für wenigstens einen Zugstrang (13) an seiner der Bodenplatte (7) zugewandten Seite ausgebildet wird, indem die Bodenplatte (7) den Zugstrang (13) in dessen Randbereich überragt.

12. Förderband nach einem der Ansprüche 8 bis 10, **dadurch gekennzeichnet, dass** der den Zugstrang (13) überragende Bereich der Bodenplatte (7) in Form einer Stufe (35) ausgeführt ist, wobei die Stufe eine Dicke (D1) aufweist, die kleiner ist als die Dicke (D2) der Bodenplatte Bereich zwischen den Stufen (35).

13. Futtermisch- oder Futterverteilwagen zur Ausbringung von Viehfutter, ausgerüstet mit einem Förderband nach einem der Ansprüche 1 bis 12.
